# EUROPEAN PATENT SPECIFICATION

(11) **EP 1 810 359 B1**
(45) Date of publication and mention of the grant of the patent: **25.12.2013**
(21) Application number: 05784370.8
(22) Date of filing: 21.09.2005
(51) Int. Cl.: H01M 8/08, H01M 8/10, H01M 8/02, H01M 8/22, H01M 8/04, H01M 4/92

(54) **USE OF AN ELECTROCHEMICAL CELL SUCH AS A FUEL CELL**
VERWENDUNG EINER ELEKTROCHEMISCHEN ZELLE WIE EINER BRENNSTOFFZELLE
UTILISATION D'UNE CELLULE ELECTROCHIMIQUE COMME UNE PILE A COMBUSTIBLE

(30) Priority: 21.09.2004 GB 0420961; 03.03.2005 GB 0504460; 03.03.2005 GB 0504465
(43) Date of publication of application: 25.07.2007
(60) Divisional application: 10166960.4
(73) Proprietor: ITM Power (Research) Limited, Sheffield South Yorkshire S4 7QQ (GB)
(72) Inventor: HIGHGATE, Donald James, Dorking, Surrey RH5 6NS (GB); BOURNE, Simon, ITM Fuel Cells Ltd., Sheffield S9 1XU (GB); SCOWCROFT, Steven David, ITM Fuel Cells Ltd., Sheffield S9 1XU (GB)
(74) Representative: Stevens, Fiona
(86) International application number: PCT/GB2005/003644
(87) International publication number: WO 2006/032887

(56) References cited:
- EP-A2- 1 328 033
- WO-A-00/35032
- WO-A-03/017396
- WO-A-03/023890
- WO-A-03/062493
- WO-A-2004/021486
- US-A1- 2003 003 348
- US-A1- 2003 134 163
- DUPONT FUEL CELLS: 'Safe Handling and Use of Perfluorosulfonic Acid Products', [Online] fuelcells.dupont.com Retrieved from the Internet: <URL:http://www2.dupont.com/FuelCells/en_US /assets/downloads/dfc301.pdf>

## Description

### Field of the Invention

This invention relates to a method of performing an electrochemical reaction.

### Background to the Invention

WO03/23890 discloses that ion-exchange materials can be produced based on hydrophilic polymers, i.e. polymers which are inherently able to absorb and transmit water throughout their molecular structure. The materials are particularly relevant to hydrogen-oxygen fuel cells, since product water can be redistributed, thereby avoiding local flooding or drying-out of the membrane. There are essentially three ways in which a hydrophilic material can be rendered ionically conducting.

The first way is to form ionically active sites by co-polymerisation from a solution of ionically active monomers; this methodology is described in WO03/23890. A strongly anionic or cationic moiety is formed in the resulting polymer, allowing it to function as a anionic-exchange (AE) or cationic-exchange (CE) material respectively.

The second way is to incorporate ionically active sites, for example by sulphonation of an existing polymer molecule (an example of this is Nafion) or by grafting to an existing polymer film.

The third way is by hydration of the hydrophilic material in an acidic or alkaline liquid. Hydrophilic materials such as HEMA (2-hydroxyethyl methacrylate) and MMA-VP (methyl methacrylate-vinylpyrrolidone) possess no intrinsic electrical properties and, if hydrated in deionised distillled (DD) water, are good electrical resistors. If, however, these materials are hydrated in an acidic or alkaline solution, they become good conductors. A limitation of this approach is that conductivity declines as the electrolyte solution washes out, the material eventually becoming electrically inactive. Such washing out is particularly problematic in electrolysers, where reactant water is normally present in large quantities, and in hydrogen-oxygen fuel cells, where water is produced.

Sodium borohydride fuel cells are also known. Sodium borohydride fuel is normally stabilised using an alkaline solution, such as aqueous sodium hydroxide.

US58804329 and US5948558 describe fuel cells in which borohydride ions (BH4") are oxidised at the anode to produce an electrical current. The fuel is in the form of a solution of, for example, sodium borohydride. Similar types of cell are also disclosed in WO-A-02/00950 and WO-A-02/052664.

There are two ways in which borohydride ions may be oxidised. When acidic conditions are used, it is thought that the borohydride ions are oxidised to form hydrogen, which is then consumed (referred to herein as a "d-type" process). Under alkaline conditions, the borohydride ions are believed to be consumed directly, i.e. there is no intermediate production of hydrogen (referred to herein as a "D-type" process). The d-type pathway yields a lower voltage (approximately 1.2V) than the D-type pathway (approximately 1.6V), since some energy is used in the evolution of hydrogen.

Although the above publications refer to d- and D-type cells, there is little evidence to suggest that an efficient cell operating under either mechanism has been produced. Indeed, it seems that no-one has actually managed to run a D-type cell.

Similar problems have been encountered with alcohol-based fuel cells; efforts to date have struggled to attain a system which operates anywhere near its theoretical maximum voltage or at acceptable levels of power density.

Another problem is associated with the fact that the amount of fuel in a cell declines as the cell converts chemical energy into electrical energy. This depletion of fuel continues until the performance diminishes rapidly and the cell ultimately ceases to function. At this point, the cell must be refuelled. There is no advance warning of when fuel reserves are low.
WO 2004/021486 A2, US 2003/0003348 A1 and WO 03/062493 A1 refer to electrochemical reactions performed in an electrochemical cell.

### Summary of the Invention

The invention relates to a method of performing an electrochemical reaction as defined in claim 1

### Description of Preferred Embodiments

The hydrophilic membrane may be ionically inactive, i.e. it possesses no intrinsic electrical properties. In this case, ionic activity is conferred to the membrane by the electrolyte. Alternatively, the hydrophilic membrane may be weakly ionically active, comprising anionic or cationic sites within its structure. Here, the aqueous electrolyte augments the ionic activity of the hydrophilic material. Weakly active membranes are those which, when hydrated in DD water, exhibit ionic conductivities which are less than 60%, typically less than 50%, of that of Nafion 117.

Alternatively the membrane may be a composite structure comprised of a neutral component and/or an AE component and/or a CE component, as disclosed in PCT/GB2005/002356. One of the ionically active membrane materials may optionally be an intrinsically strong ionic conductor.

The hydrophilic membrane may be obtained using any suitable method known in the art. For example, a weakly ionically active membrane may be formed by according to the techniques described in WO03/23890. The membrane is a hydrophilic polymer, e.g. obtainable by the (co)polymerisation of monomers such as methyl methacrylate, acrylonitrile, N-vinyl-2-pyrrolidinone, [2-(acryloyloxy)ethyl]trimethylammonium chloride or [3-(methylacryloylamino)propyl]trimethylammonium chloride, and is preferably cross-linked. For example, an AE membrane material is preferably a copolymer of hydrophilic and hydrophobic monomers, preferred monomers including acrylonitrile, 1-vinyl-2-pyrrolidinone, hydroxyethyl methacrylate and methyl methacrylate. Preferably, the strongly anionic group is or is derived from [3-(mefhylacryloyamino)propyl]trimethylammonium chloride, [2-(acryloyloxy)ethyl]trimethylammonium chloride, sodium hydroxide or potassium hydroxide. Particularly preferred AE membrane materials are those disclosed in Table 1 of this specification.

Suitable fuels include alcohols (e.g. methanol and ethanol) and borohydrides (e.g. sodium borohydride). An example of a liquid oxidant is hydrogen peroxide. Another is KMnO₄.

The fuel or other oxidisable component (e.g. if the cell is used as an electrolyser) is liquid, and it may be desirable that the system is not compressible. The presence of water allows fuel and/or oxidant to be carried into the hydrophilic membrane.

The electrolyte may be acidic or alkaline. Examples of suitable electrolytes include toluenesulphonic acid (TSA), vinylsulphonic acid, acrylamido-(2-methyl)propanesulphonic acid (AMPSA), sodium hydroxide or potassium hydroxide. When the reactant is an alcohol or a borohydride, it is preferred that the electrolyte is an alkali, such as sodium or potassium hydroxide. The concentration of electrolyte required will be apparent to those skilled in the art, and can be controlled, for example, by controlling input into the cell.

It will be appreciated that, when the fuel is a borohydride solution, the cell may operate via the d- or D-type mechanism, depending on the conditions employed. The d-type mechanism may be effected by simply using a platinum catalyst at the anode. For a D-type system, it is preferred that a gold catalyst is used, and that the borohydride solution is an alkaline solution, preferably containing potassium hydroxide or sodium hydroxide.

When the fuel is an alcoholic fuel, then it is preferred that the alcohol is methanol or ethanol, preferably in an alkaline solution. Suitable fuels may be stabilised by the presence of acid or alkali. For example, a fuel may be stabilised with alkali, on one side of the membrane, and/or an oxidant may be stabilised with acid, on the other. More generally, however, liquids on either or both sides of the membrane may be acidic or alkaline.

If one of the electrolyte and the fuel is charged, the cell acts as if it comprised a simple acid or alkali membrane. If both are charged, the effect is composite.

The fuel cell may be in the form of a membrane-electrode assembly (MEA) or a stack of MEAs. Methods for the production of such devices are disclosed in WO-A-03/23890.

The following Examples illustrate the invention.

### Materials

Abbreviations and materials used herein are:
acrylonitrile (AN)
1-vinyl-2-pyrrolidinone (VP)
hydroxyethyl methacrylate (HEMA)
methyl methacrylate (MMA)
[3-(methylacryloylamino)propyl]trimethylammonium chloride (BA)
[2-(acryloyloxy)ethyl]trimethylammonium chloride (BN)
dimethylaminoethyl acrylate (BE)
vinylbenzyl trimethylammonium chloride (BV)
sodium hydroxide (BS)
potassium hydroxide (BP)
HPLC-grade water (R)
allyl methacrylate (X)
azobisisobutyronitrile (Z)

Twelve AE membrane materials were produced, having a variety of alkaline moieties permanently polymerised in the material. The AE materials had the following constituents:

**Table 1**

| **Sample No.** | **VP** | **AN** | **HEMA** | **MMA** | **BV** | **BE** | **BA** | **BN** | **X** | **R** | **z** |
|---|---|---|---|---|---|---|---|---|---|---|---|
| **1g** | 70.67 | 70.67 | | | | 28.39 | | | 1.89 | 28.39 | |
| **1t** | 69.76 | 69.76 | | | | 27.90 | | | 1.86 | 27.90 | 2.80 |
| **2g** | 70.67 | | 70.67 | | 28.39 | | | | 1.89 | 28.39 | |
| **2t** | 69.76 | | 69.76 | | 27.90 | | | | 1.86 | 27.90 | 2.80 |
| **3g** | 70.67 | | 70.67 | | | 28.39 | | | 1.89 | 28.39 | |
| **3t** | 69.76 | | 69.76 | | | 27.90 | | | 1.86 | 27.90 | 2.80 |
| **4g** | 70.67 | | 70.67 | | | | 56.78 | | 1.89 | | |
| **4t** | 69.76 | | 69.76 | | | | 55.80 | | 1.86 | | 2.80 |
| **5g** | 70.67 | | | 70.67 | | | | 34.07 | 1.89 | 22.7 | |
| **5t** | 69.76 | | | 69.76 | | | | 34.86 | 1.86 | 20.92 | 2.80 |
| **6g** | 70.67 | | | 70.67 | | 28.39 | | | 1.89 | 28.39 | |
| **6t** | 69.67 | | | 69.67 | | 27.90 | | | 1.86 | 27.90 | 2.80 |

In Table 1, the suffixes "g" and "t" refer to curing by gamma irradiation and by heat respectively. All units are in grams.

### Example 1: d-type borohydride fuel cell

A sample of material 5g, hydrated in 2 M potassium hydroxide solution, was used as the membrane for a borohydride fuel cell. The cell had the following properties and components:

| | |
|---|---|
| active area | 3.142 cm² |
| anode/cathode catalyst | Pt Black, 5 mg/cm² Nafion solution treated (Lynntech) |
| electrode | 0.35 mm ELAT graphitised carbon cloth |
| current collector | 0.85 mm stainless steel mesh |

A fuel solution was prepared by dissolving 1 g of sodium borohydride in 100 g of water. After 15 minutes, small bubbles could be seen on the sides of the mixing vessel. These were assumed to have resulted from the slow evolution of hydrogen.

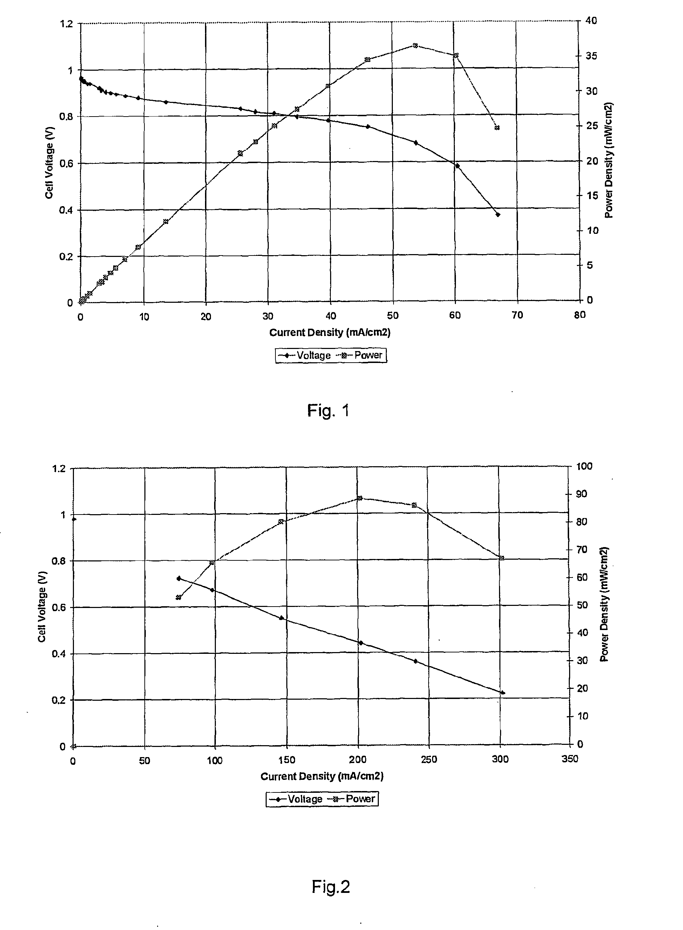

Approximately 10 ml sodium borohydride solution was then introduced directly into the anode chamber of the fuel cell. Oxygen was supplied to the cathode chamber. Neither the fuel nor oxidant was circulated. The open circuit voltage climbed quickly to 0.9495 V. The cell was then subjected to a series of short circuit tests through a range of different resistances before undergoing a polarisation test. The results are shown in Fig. 1 and Table 2.

**Table 2**

| Resistance (Ω) | Max Current Density (mA/cm²) | Min Voltage (V) | Power Density (mW/cm²) |
|---|---|---|---|
| 0.5 | 207.2 | 0.4637 | 96.1 |
| 0.3 | 241.0 | 0.4085 | 98.4 |
| 0 (a) | 314.4 | 0.2731 | 85.9 |
| 0 (b) | 321.0 | 0.2509 | 80.5 |
| 0 (c) long | 320.1 | 0.2477 | 79.3 |

The cell showed higher than expected performance. A maximum power density of 36.6 mW/cm² at 53.8 mA/cm² was recorded during polarisation and a transient of 98.4 mW/cm² at 241 mA/cm². The voltage profile of the polarisation curve shows the three characteristic regions often referred to as (i) kinetic, (ii) resistive, and (iii) mass transport-limited. Of particular interest is the mass transport region characterised by a trail-off in voltage at higher current densities.

A second series of short circuit tests was conducted. These were designed to reveal more of the transient power response at higher current densities. Quick short circuit tests such as these are presumed to utilise fuel which is already present at the membrane surface and as such do not rely on further fuel to permeate through the current collector and electrode structures.

The results are shown in Fig. 2. Each of the data points was obtained from independent rapid testing, the open circuit voltage being allowed to climb back to 0.9 V before the next test was conducted. The open circuit voltage after this round of tests was 0.9793 V.

During these tests small bubbles of what was presumed to be hydrogen could be seen slowly forming in the anode chamber. This suggested that the fuel cell, despite being fed directly with sodium borohydride solution, was actually running on hydrogen being produced at the anode catalyst.

A sample of material 5g, pre-treated in 2 M sodium hydroxide, was then prepared and used in place of the existing membrane in the cell. This appeared to have a positive effect on the current and power densities. On first supplying the fuel to the cell, the open circuit voltage rose quickly to 0.921 V. A series of short circuit tests were conducted to evaluate transient power response. The largest current drawn from the cell was over 1.5 A, which equates to 478.9 mA/cm². The maximum transient power density was 136.7 mW/cm² at 307.4 mA/cm².

### Example 2: D-type borohydride fuel cell

A fuel cell similar to that of Example 1 was used, having an anode catalyst which was a gold mesh of the following specification:

| | |
|---|---|
| purity | 99.99% |
| wire diameter | 0.060 mm |
| aperture size | 0.25 mm |
| open area | 65%. |

Membrane materials 4g and 6g were tested. The fuel used was 10 wt% sodium borohydride in 2 M sodium hydroxide solution.

The maximum open circuit voltage (OCV) achieved using material 4g was 1.5182. An OCV of 1.5296 was attained using material 6g. These results suggest that the alkaline nature of the hydrophilic membrane materials prevented "runaway" hydrogen evolution. Coupling this environment with a gold catalyst proved sufficient to oxidise sodium borohydride directly, i.e. *via* the D-type mechanism.

### Example 3: alcohol fuel cell

A fuel cell was designed to enable the evaluation of the materials of Example 1 with methanol and ethanol fuels. The cell had the following characteristics:

| | |
|---|---|
| active area | 3.142 cm² |
| anode catalyst | Pt:Ru Black, 5 mg/cm² Nafion solution treated (Lynntech) |
| cathode catalyst | Pt Black, 5 mg/cm² Nafion solution treated (Lynntech) |
| electrode | ELAT graphitised carbon cloth, nominally 0.35 mm thick |
| current collector | stainless steel mesh, nominally 0.85 mm thick |

The anode of the cell was fed in turn with a range of fuels, including hydrogen. This was achieved by attaching short silicone hoses to the anode feed and exhaust ports and injecting the liquid fuels directly with a syringe. Where air was used as an oxidant, the cathode chamber was left open to the atmosphere. Where hydrogen and oxygen were used, they were supplied by a small electrolyser at very slightly above atmospheric pressure. Neither fuel nor oxidant was circulated. All tests were conducted at room temperature.

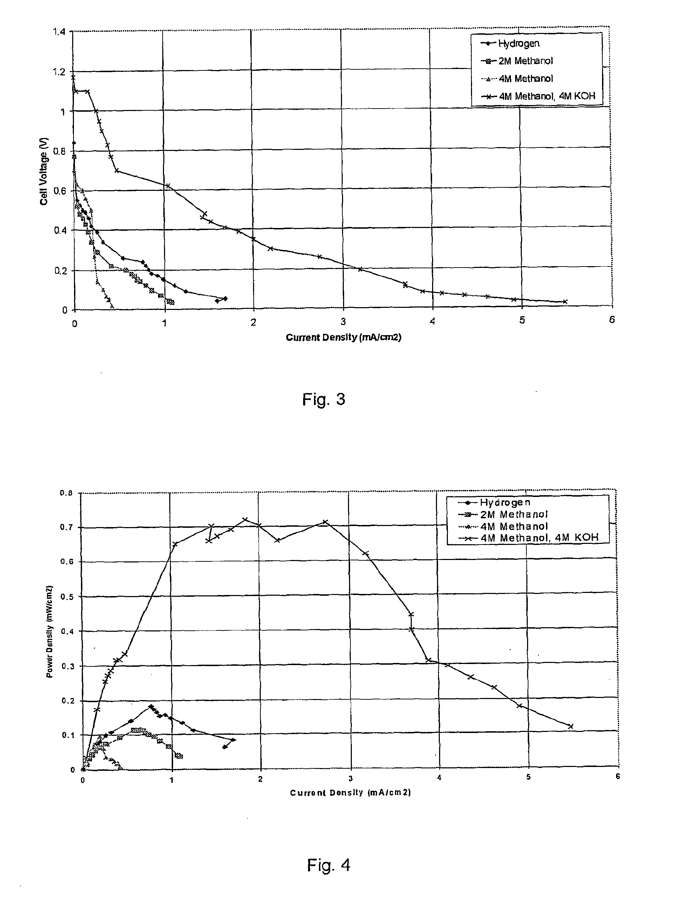

A polarisation curve was recorded for each system, and where possible the cell was short-circuited to enable a maximum transient current density to be measured. The results are shown in Figs. 3 and 4, and Table 3.

**Table 3**

| Fuel | Oxidant | Max OCV (V) | Max power density (mW/cm²) | Current density @ max power (mA/cm²) | Max sustainable current density (mA/cm²) | Max transient current density (mA/cm²) |
|---|---|---|---|---|---|---|
| Hydrogen | Oxygen | 0.86 | 0.18 | 0.76 | 1.69 | 3.72 |
| 2M Methanol | Oxygen | 0.77 | 0.13 | 0.31 | 1.08 | 5.70 |
| 2M Methanol | Air | 0.49 | 0.04 | 0.13 | 0.29 | - |
| 4M Methanol | Oxygen | 0.705 | 0.10 | 0.32 | 0.41 | 2.42 |
| 4M Methanol 4M KOH | Oxygen | 1.175 | 0.72 | 1.85 | 5.48 | 72.93 |

It is clear that the cells tested functioned successfully on all fuels. The addition of potassium hydroxide to the fuel resulted in the largest increase in performance, power density being boosted by a factor of seven. The open circuit voltage of 1.175 V is extremely high and is close to the theoretical maximum of 1.21 V attainable for methanol fuel.

Direct methanol-fed (DMF) cells were also run using materials 2g, 4g and 5g, and direct ethanol-fed (DEF) cells were run using materials 4g and 5g. In both modes, significant performance was achieved by pre-treating the AE samples in an alkaline solution such as 2 M sodium hydroxide or potassium hydroxide solution.

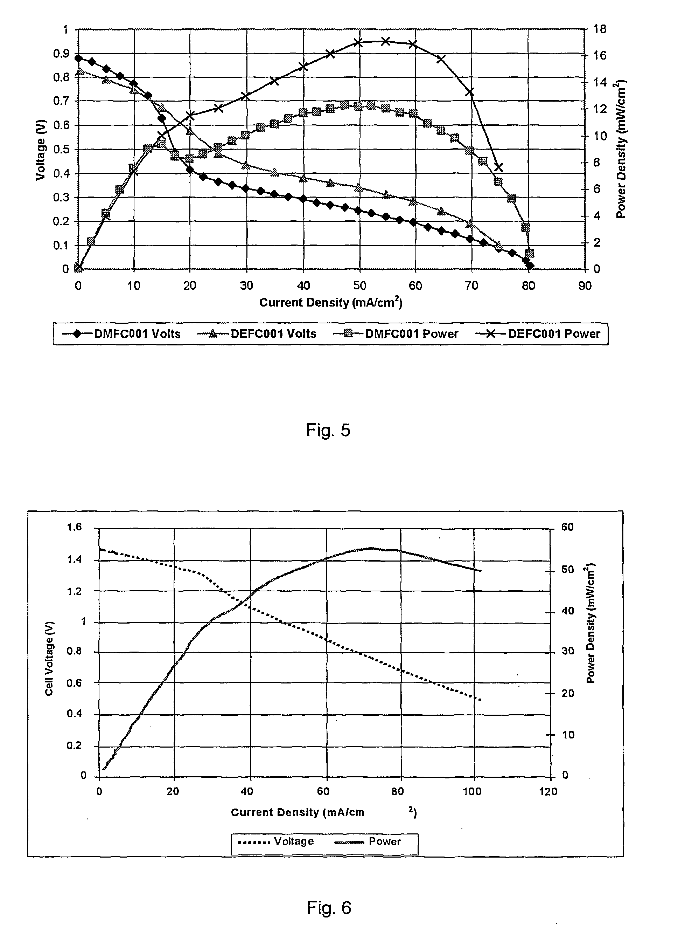

Fig. 5 shows the results obtained from a fuel cell utilising AE sample 4g hydrated in 2 M sodium hydroxide when fed with methanol and ethanol-based fuels in turn. The methanol-fed cell had a power density of 12 mW/cm² at 52 mA/cm². The ethanol-fed cell had a power density of 17 mW/cm² at 54 mA/cm².

Further testing of an ethanol fed cell utilising AE 4g with various treatments, produced the results shown in Table 4.

**Table 4**

| Sample | Fuel | Oxidant | Max OCV | Max current density polarisation (mA/cm²) | Max current density transient (mA/cm²) | Max power density polarisation (mW/cm²) | Max power density transient (mW/cm²) |
|---|---|---|---|---|---|---|---|
| i4ghR | 2M Ethanol | Air | 0.6295 | 2.36 | 16.01 | 0.45 | 2.31 |
| i4ghR | 2M Ethanol | Oxygen | 0.6388 | 2.77 | 15.37 | 0.47 | 2.37 |
| i4ghR | 2M Ethanol, 2M NaOH | Oxygen | 0.7230 | 8.72 | 52.26 | 1.48 | 6.96 |
| i4gh2Na | 2M Ethanol, 2M NaOH | Oxygen | 0.8808 | 92.65 | 322.50 | 15.15 | 63.95 |

### Further Materials

Four hydrophilic membrane materials (A to D) were produced according to the techniques described in WO03/23890. The composition of each material is shown below, in Table 5. Materials A and B are weakly ionically active AE materials, owing to the low concentration of trimethylammonium chloride solutions used in their manufacture. Materials C and D are ionically inactive.

**Table 5**

| Ingredient | **A** | **B** | **C** | **D** |
|---|---|---|---|---|
| 1-vinyl-2-pyrrolidinone | 70.67 | 70.67 | 0.00 | 100.00 |
| Acrylonitrile | 0.00 | 0.00 | 0.00 | 100.00 |
| Hydroxyethyl methacrylate | 70.67 | 70.67 | 100.00 | 0.00 |
| Methyl methacrylate | 0.00 | 0.00 | 0.00 | 0.00 |
| [2-(Acryloyloxy)ethyl]trimethylammonium chloride (80%) | 0.00 | 35.38 | 0.00 | 0.00 |
| (3-(Methylacryloylamino)propyl)trimethyl-ammonium chloride (50%) | 56.60 | 0.00 | 0.00 | 0.00 |
| Allyl methacrylate | 1.89 | 1.89 | 0.00 | 2.00 |
| HPLC water | 0.00 | 21.22 | 10.00 | 0.00 |

### Example 4

A fuel cell comprising membrane material A was run on 2 M ethanol. The same cell was then run using 2 M ethanol doped with 2 M NaOH. As Table 6 shows, the performance of the cell was improved by adding 2 M NaOH to the fuel.

**Table 6**

| **Fuel** | **Oxidant** | **Open circuit voltage (V)** | **Max current density polarisation (mA/cm²)** | **Max current density transient (mA/cm²)** | **Max power density polarisation (mW/cm²)** | **Max power Density transient (mW/cm²)** |
|---|---|---|---|---|---|---|
| 2M EtOH | Oxygen | 0.6388 | 2.77 | 15.37 | 0.47 | 2.37 |
| 2M EtOH, 2M NaOH | Oxygen | 0.7230 | 8.27 | 52.26 | 1.48 | 6.96 |

### Example 5

A fuel cell comprising membrane material B was run using three different fuels: hydrogen gas, 4 M methanol and 4 M methanol doped with 4 M KOH. In all cases, the oxidant was oxygen. It is clear from Table 7 that the addition of KOH to the methanol fuel had a positive impact on performance.

**Table 7**

| **Fuel** | **Oxidant** | **Open circuit voltage (V)** | **Max current Density polarization (mA/cm²)** | **Max current density transient (mA/cm²)** | **Max power density polarisation (mW/cm²)** |
|---|---|---|---|---|---|
| Hydrogen | Oxygen | 0.860 | 1.69 | 3.72 | 0.18 |
| 4M MaOH | Oxygen | 0.705 | 0.41 | 2.24 | 0.1 |
| 4M MeOH, 4M KOH | Oxygen | 1.175 | 5.48 | 72.93 | 0.7 |

### Example 6

A 4 M methanol fuel cell comprising membrane material C yielded a peak power density of 0.0006875 mW/cm², i.e. effectively nothing. A similar result was achieved using material D. The addition of NaOH to the fuel had a dramatic impact on performance, resulting in a peak power density of over 1 mW/cm², a peak current density of 9.8 mA/cm² and a transient peak current density of 30 mA/cm².

### Example 7

A fuel cell comprising an anionic SPE was supplied with 1 wt% sodium borohydride solution (fuel) doped with 2 M potassium hydroxide, and 1 wt% potassium permanganate solution (oxidant) doped with 2 M potassium hydroxide.

The polarisation data are shown in Fig. 6. The cell achieved an OCV of 1.5 V. The oxidant solution was purple in colour but eventually began to change to green, indicating that refuelling or a top-up would soon be necessary. The change in colour is attributable to manganate ions, formed by reduction of permanganate ions.

### Example 8

A fuel cell comprising a cationic SPE was run on 1 wt% sodium borohydride solution (fuel) and 1 wt% potassium permanganate solution (oxidant) doped with 0.1 M sulphuric acid.

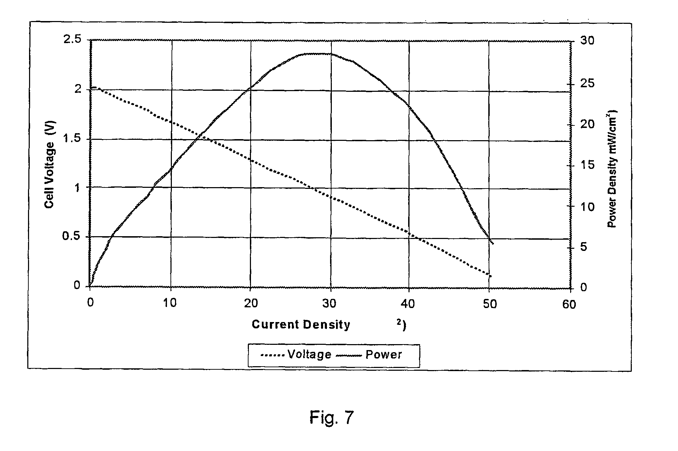

The polarisation data are shown in Fig. 7. The cell achieved an OCV of 2 V. The oxidant solution changed from purple to colourless, providing an advanced warning of the need to refuel or top up.

### Example 9

A fuel cell comprising an anionic SPE was run on 2 M methanol solution (fuel) doped with calcium hydroxide solution and 1 wt% hydrogen peroxide solution (oxidant).

The fuel changed from clear to cloudy, providing an advanced warning of the need to refuel or top up. The change in opacity is attributable to calcium carbonate, which is formed from the reaction of calcium hydroxide and carbon dioxide, the latter being a product of the oxidation of methanol.

## Claims

1. A method of performing an electrochemical reaction using an oxidant and an oxidisable liquid fuel selected from an alcohol and borohydride, in an electrochemical cell comprising electrodes separated by a hydrophilic polymer membrane in which an electrolyte is taken up, the method comprising introducing into the cell the fuel, the oxidant, and acid or alkali, wherein the membrane is ionically inactive or weakly active, and wherein weakly active means that the membrane, when hydrated in deionised distilled water, has an ionic conductivity which is less than 60% of Nafion 117.

2. A method according to claim 1, wherein the oxidant is a liquid.

3. A method according to either preceding claim, wherein one of the fuel and the oxidant includes an acid and the other includes an alkali.

4. A method according to any preceding claim, wherein the fuel is methanol, ethanol or sodium borohydride.

5. A method according to any preceding claim, wherein the electrolyte is alkaline.

6. A method according to claim 5, wherein the electrolyte is sodium hydroxide or potassium hydroxide.

7. A method according to any preceding claim, wherein the cell is in the form of a membrane-electrode assembly (MEA) or a stack of MEAs.

8. A method according to any preceding claim, in which the membrane is a composite membrane of any combination of neutral, anion-exchange and cation-exchange materials.

9. A method according to any preceding claim, wherein the anode comprises a catalyst.

10. A method according to claim 9, wherein the catalyst comprises platinum.

11. A method according to claim 9, wherein the catalyst comprises gold.

## Patentansprüche

1. Verfahren zum Ausführen einer elektrochemischen Reaktion unter Verwendung eines Oxidationsmittels und eines oxidierbaren Flüssigbrennstoffs, ausgewählt aus einem Alkohol und Borhydrid, in einer elektrochemischen Zelle, die Elektroden umfasst, die durch eine hydrophile Polymermembran getrennt sind, in der ein Elektrolyt aufgenommen ist, wobei das Verfahren das Einleiten des Brennstoffs, des Oxidationsmittels und von Säure oder Alkali in die Zelle umfasst, wobei die Membran ionisch inaktiv oder schwach aktiv ist, und wobei schwach aktiv bedeutet, dass die Membran, wenn sie in entionisiertem destilliertem Wasser hydratisiert wird, eine ionische Leitfähigkeit hat, die geringer ist als 60% von Nafion 117.

2. Verfahren nach Anspruch 1, wobei das Oxidationsmittel eine Flüssigkeit ist.

3. Verfahren nach einem vorherigen Anspruch, wobei der Brennstoff oder das Oxidationsmittel eine Säure und das andere ein Alkali enthält.

4. Verfahren nach einem vorherigen Anspruch, wobei der Brennstoff Methanol, Ethanol oder Natriumborhydrid ist.

5. Verfahren nach einem vorherigen Anspruch, wobei der Elektrolyt alkalisch ist.

6. Verfahren nach Anspruch 5, wobei der Elektrolyt Natriumhydroxid oder Kaliumhydroxid ist.

7. Verfahren nach einem vorherigen Anspruch, wobei die Zelle in Form einer Membran-Elektroden-Baugruppe (MEA) oder eines Stapels von MEAs vorliegt.

8. Verfahren nach einem vorherigen Anspruch, wobei die Membran eine Kompositmembran aus einer beliebigen Kombination von neutralen, Anionenaustausch- und Kationenaustauschmaterialien ist.

9. Verfahren nach einem vorherigen Anspruch, wobei die Anode einen Katalysator umfasst.

10. Verfahren nach Anspruch 9, wobei der Katalysator Platin umfasst.

11. Verfahren nach Anspruch 9, wobei der Katalysator Gold umfasst.

## Revendications

1. Procédé de réalisation d'une réaction électrochimique utilisant un oxydant et un combustible liquide oxydable choisi parmi un alcool et du borohydrure, dans une cellule électrochimique comprenant des électrodes séparées par une membrane de polymère hydrophile dans laquelle un électrolyte est capturé, le procédé comprenant l'introduction dans la cellule du combustible, de l'oxydant, et d'un acide ou d'un alcali, dans lequel la membrane est ioniquement inactive ou faiblement active, et dans lequel faiblement active signifie que la membrane, lorsqu'elle est hydratée dans de l'eau distillée désionisée, a une conductivité ionique qui est inférieure à 60 % de Nafion 117.

2. Procédé selon la revendication 1, dans lequel l'oxydant est un liquide.

3. Procédé selon l'une ou l'autre des revendications précédentes, dans lequel l'un du combustible et de l'oxydant comprend un acide et l'autre comprend un alcali.

4. Procédé selon l'une quelconque des revendications précédentes, dans lequel le combustible est le méthanol, l'éthanol ou le borohydrure de sodium.

5. Procédé selon l'une quelconque des revendications précédentes, dans lequel l'électrolyte est alcalin.

6. Procédé selon la revendication 5, dans lequel l'électrolyte est l'hydroxyde de sodium ou l'hydroxyde de potassium.

7. Procédé selon l'une quelconque des revendications précédentes, dans lequel la cellule est sous forme d'un ensemble membrane-électrode (MEA) ou d'un empilement de MEA.

8. Procédé selon l'une quelconque des revendications précédentes, dans lequel la membrane est une membrane composite de toute combinaison de matériaux neutres, échangeurs d'anions et échangeurs de cations.

9. Procédé selon l'une quelconque des revendications précédentes, dans lequel l'anode comprend un catalyseur.

10. Procédé selon la revendication 9, dans lequel le catalyseur comprend du platine.

11. Procédé selon la revendication 9, dans lequel le catalyseur comprend de l'or.
